(19) **Europäisches Patentamt / European Patent Office / Office européen des brevets**

(11) **EP 1 804 438 A1**

(12) **EUROPEAN PATENT APPLICATION**

(43) Date of publication:
04.07.2007 Bulletin 2007/27

(51) Int Cl.:
*H04L 12/56* (2006.01)

(21) Application number: 06126484.2

(22) Date of filing: 19.12.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 28.12.2005 FI 20055703

(71) Applicant: Nokia Corporation
02150 Espoo (FI)

(72) Inventor: Kuurne, Antti
02600, Espoo (FI)

(74) Representative: Niemi, Hakan Henrik
Kolster Oy Ab,
Iso Roobertinkatu 23,
P.O. Box 148
00121 Helsinki (FI)

(54) **Packet scheduler in a radio system**

(57) The invention relates to scheduling of data packets in a radio transmitter. A scheduling metric is applied in the scheduling, which scheduling metric may be dynamically adjusted during transmission of data packets to the receivers.

Fig. 2

**Description**

FIELD

The invention relates to data packet scheduling in a radio system.

BACKGROUND

High Speed Downlink Packet Access (HSDPA) is a 3GPP (The 3rd Generation Partnership Project) release 5 improvement for the earlier wideband code-division multiple-access (WCDMA) system. One of the main improvements in the HSDPA is moving the packet scheduler from the radio network controller (RNC) to the Node B. A packet scheduler (PS) is a logical unit that decides to which user, with which resources (codes, power) and at what time downlink transmission is carried out.

In addition to moving the PS to the Node B, HSDPA has introduced time-division-based resource allocation between users in the same cell. It is possible and even typical to use all the available HSDPA power and codes for a single user during one transmission time interval (TTI) of 2 ms. This allows, among other things, the scheduler to efficiently take into account the current radio conditions when deciding which user the Node B should transmit to on the next TTI.

Due to fast fading, the instantaneous path loss from the sender to the receiver can change by 20 dB, for instance, within a short period of time. How to take this fact into account is a key issue when designing packet schedulers for HSDPA implementations.

SUMMARY

It is thus an object of the invention to provide a packet scheduler giving a good performance in a quickly changing radio environment.

In an aspect of the invention, there is provided a data packet scheduler for a radio system, comprising means for scheduling, by applying a scheduling metric, data packets to be delivered in radio connections within a radio cell in future transmission time intervals, and means for adjusting fairness of the scheduling metric dynamically by adjusting a fairness parameter during delivery of data packets.

In another aspect of the invention, there is provided a method of scheduling data packets in a radio system, comprising steps of scheduling data packets, by applying a scheduling metric, to be delivered in radio connections within a radio cell in future transmission time intervals, and adjusting fairness of the scheduling metric dynamically during delivery of data packets in the radio connections.

In still another aspect of the invention, there is provided a computer program product encoding a computer program of instructions for executing a computer process for scheduling data packets in radio connections within a radio cell, the process comprising steps of scheduling data packets to be delivered in radio connections in future transmission time intervals, by applying a scheduling metric, and adjusting fairness of the scheduling metric dynamically during delivery of data packets in the radio connections.

In still another aspect of the invention, there is provided a computer program distribution medium readable by a computer and encoding a computer program of instructions for scheduling data packets in radio connections within a radio cell, the process comprising steps of scheduling data packets, by applying a scheduling metric, to be delivered in future transmission time intervals, and adjusting fairness of the scheduling metric dynamically during delivery of data packets.

The invention provides the advantage that fairness of the scheduling metric may, flexibly, dynamically and automatically, be controlled in the network.

DRAWINGS

Figure 1 shows one embodiment of a radio network;

Figure 2 shows an embodiment of an arrangement according to the invention; and

Figure 3 shows one embodiment of a method according to the invention.

EMBODIMENTS

In the following, some embodiments according to the invention will be disclosed in more detail.

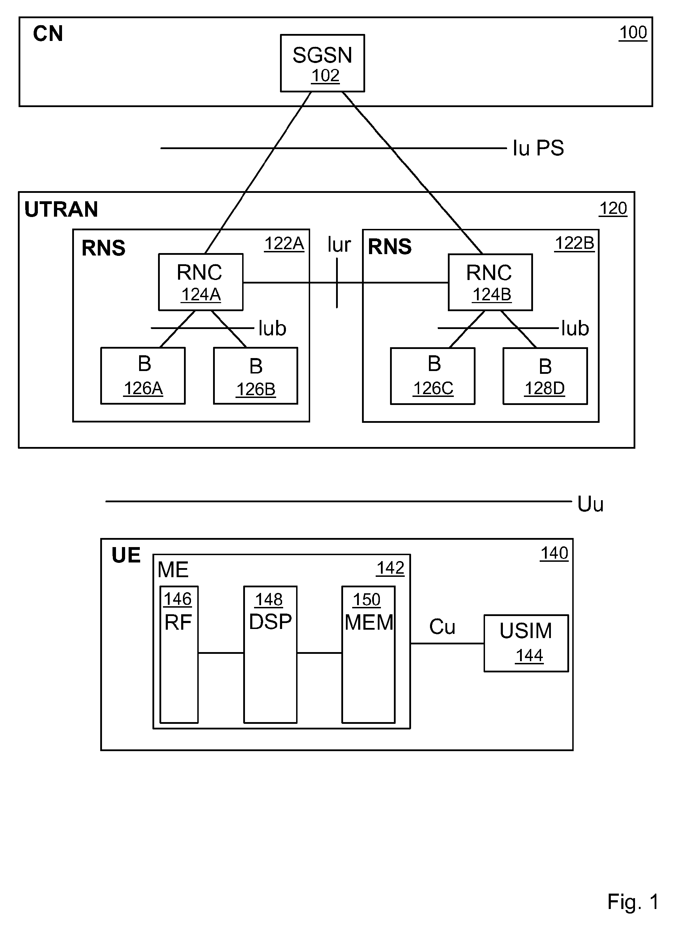

Figure 1 illustrates an example of a wireless telecommunications system to which the present solution may be applied. Below, embodiments of the invention will be described using UMTS (Universal Mobile Telecommunications System) as an example of a wireless telecommunications system. The invention may, however, be applied to any wireless telecommunications system which supports data packet transmission. The structure and functions of such a wireless telecommunications system are only described to the extent relevant to the invention.

The wireless telecommunications system may be divided into a core network (CN) 100, a UMTS terrestrial radio access network (UTRAN) 120, and user equipment (UE) 140. The core network 100 and the UTRAN 120 are part of a network infrastructure of the wireless telecommunications system. The UTRAN 120 is typically implemented by wideband code-division multiple-access (WCDMA) radio access technology.

The core network 100 includes a serving GPRS support node (SGSN) 102 connected to the UTRAN 102 over an lu PS interface. The SGSN 102 represents the center point of the packet-switched domain of the core network 100. The main task of the SGSN 102 is to transmit packets to the user equipment 140 and to receive packets from the user equipment 140 by using the UTRAN 120. The SGSN 102 may contain subscriber and location information related to the user equipment 140.

The UTRAN 120 includes radio network subsystems (RNS) 122A and 122B, each of which includes at least one radio network controller (RNC) 124A, 124B and node B's 126A, 126B, 126C, 126D. Some functions of the radio network controller 124A, 124B may be implemented with a digital signal processor, memory, and computer programs for executing computer processes.

The node B's 126A, 126B, 126C, 126D implement the Uu interface, through which the user equipment 140 may access the network infrastructure.

Some functions of the base stations 126A, 126B, 126C and 126D may be implemented with a digital signal processor, memory, and computer programs for executing computer processes.

The user equipment 140 may include two parts: mobile equipment (ME) 142 and a UMTS subscriber identity module (USIM) 144. The mobile equipment 142 typically includes radio frequency parts (RF) 146 for providing the Uu interface. The user equipment 140 further includes a digital signal processor 148, memory 150, and computer programs for executing computer processes. The user equipment 140 may further comprise an antenna, a user interface, and a battery not shown in Figure 1. The USIM 144 comprises user-related information and information related to information security.

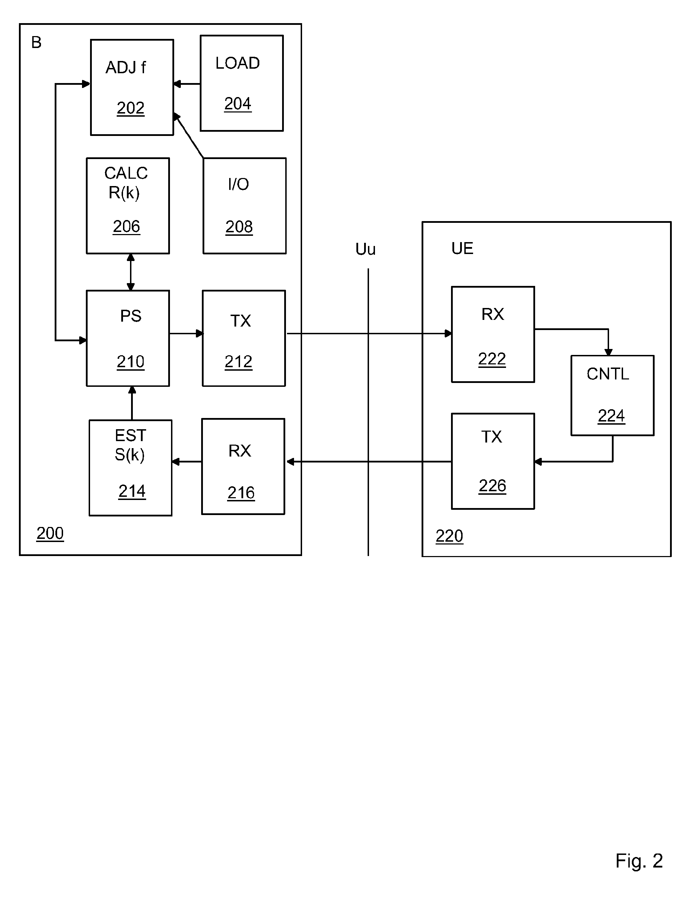

Figure 2 shows one embodiment of an arrangement according to the invention. The figure shows a Node B 200 and a user 220 served by the Node B. The user refers here to a data connection. A user equipment or receiver may thus have several users if it receives data packets from a transmitter via more than one data connection. The Node B comprises a transmitting unit 212 and a receiving unit 216 configured to transmit and receive data packets, respectively. In the following, the invention is explained with reference to downlink transmission but the invention may as well be applied to scheduling of uplink transmission. The scheduling may thus be carried out with respect to downlink data packet delivery, or transmission of data packets from a base station to users served by the base station. Alternatively, the scheduling may be carried out on uplink such that a base station schedules data packets to be delivered (or received by the base station) on the uplink by the users served by the base station.

The user equipment 220 comprises a receiving unit 222 for receiving data packets transmitted by a Node B, and a transmitting unit 226 for transmitting data packets to a Node B. The controller 224 is configured to perform other functionality that is performed in the UE, including the processing of data to be received/transmitted. With respect to the invention, the controller may include functionality for estimating the quality of the receive channel and functionality for transmitting this quality information to the Node B.

The Node B shown in Figure 2 includes means for estimating 214 the radio environment of user equipment. In conjunction with the invention, the estimation includes estimating how many bits may be transmitted to or received from a user in a given transmission time interval. This estimate may be denoted with S(k). The radio environment or quality estimate may be performed in many ways, such as by estimating the uplink quality or by receiving a quality parameter from the UE reporting the quality of the downlink channel. The radio environment estimate may include information, such as the distance of the UE from the Node B, or the location (distance and direction) of the UE with respect to the Node B.

The Node B may also include a load estimator 204 for estimating load in the cell of the Node B. The load estimate may be a number of users (user equipment) in the cell area. Alternatively, the load estimate may include the amount of data transmitted or the amount of resources such as codes and/or power transmitted by the node B in a time interval.

Figure 2 also shows a packet scheduler 210 for performing the actual packet data scheduling. Scheduling means processing, by which the node B decides the amount of data and the resources that are to be used when sending data to each user residing in the area of the node B. Scheduling is performed on the basis of scheduling metric, which means a score or utility or priority by which the transmitter determines which user should be served in a future transmission time interval.

One feature of a packet scheduler is fairness that it provides to simultaneous users within a cell. Fairness refers to the equality of the service level, such as bit rate, given to users within a cell. If the users get the same bit rate, the scheduling is called fair. The fairness decreases, and unfairness increases, when the difference in data rates of the different users increases. The embodiment of Figure 2 illustrates means for adjusting 202 the fairness of the scheduler. A parameter "f" is introduced to depict the amount of fairness. The value of f may depend on the load of the node B, which is estimated in unit 204. Alternatively, the node B may include a user interface 208, whereby an operator may feed a suitable value for "f".

Figure 2 also shows a calculating unit 206 for estimating the past average throughput R(k) to a user. The calculating unit 206 may keep in a memory the last throughput values and form an average throughput value of these past values.

The packet scheduler 210 uses a scheduling metric in deciding the amount of data packets to be transmitted to a user. The packet scheduler 210 may use S(k), R(k) and f as input values when determining the suitable scheduling metric for a user in a following transmission time interval.

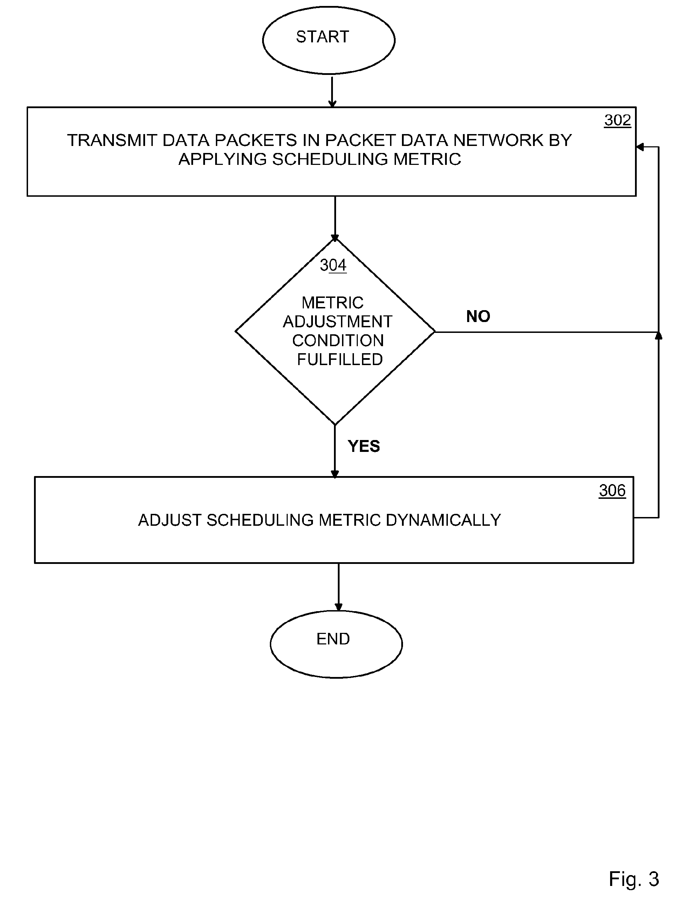

In the following, an embodiment of the method is disclosed with reference to Figure 3.

Step 302 discloses the transmission of the data packets by applying the scheduling metric. The scheduling metric is a cell-specific manner to determine how the users within the cell range are served in their downlink packet transmission. In the context of the invention, a cell denotes the operating range of a base station, which base station is also called Node B in conjunction with the UMTS system. The range of a base station may be sectorized, whereby a cell may refer to a sector. A base station may thus have several cells/sectors. In another embodiment, the cell denotes a range in the form of a circle formed by an omni-directional antenna around the base station.

A node 304 depicts a condition node to decide whether the scheduling metric adjustment condition is fulfilled. In 306, if the adjustment condition is fulfilled, the metric is dynamically adjusted, otherwise the transmission continues with the same metric.

In one embodiment of the invention, the metric applied is as shown by equation (1):

$$(1) \qquad M = \frac{S(k)^f}{R(k)},$$

wherein

M is the metric,

S(k) is the number of bits that can be transmitted to a user in a $k^{th}$ TTI,

R(k) is an average throughput to a user in previous TTI's, and

f is a fairness parameter for controlling the fairness of the metric.

The scheduling metric gives a user-specific number value depicting the amount of data to be sent to a user in relation to past transmissions to the user. Each user has his own scheduling metric value, M1 for user 1, M2 for user 2 and so on. In HSDPA, constant power may be available for each TTI:lle. The number of codes is chosen optimally such that the given power allows transmission of as many bits as possible to a user. S(k) is an estimate of how many bits can be transmitted to a user in next TTI Thus, the higher the users metric M is, the higher priority the user has to get scheduled. Alternatively, to calculation of the scheduling metric values continuously, the metric values may be tabulated. Three tables A, B and C, for instance, may be formed beforehand, and one of the tables may be chosen on the basis of the load of the cell.

In equation (1), a single parameter f is introduced, which can in a continuous manner, for each TTI, transform the fairness of the scheduling metric to anything between absolutely fair and very unfair.

When the value of f is zero, equation (1) converges to equal throughput scheduling (2), which is a maximally fair scheduling algorithm.

$$(2) \qquad M = \frac{1}{R(k)}.$$

In equal throughput scheduling, transmission turns are allocated to users in such a way that average throughput is the same for each user in the same cell. Thus, the M values for different users converge to equal. The metric of equation (2) includes no information of the propagation environment of the user. That is, the term S(k), implicitly highlighting the radio conditions of a user, which was present in equation (1), is lacking in equation (2). Therefore, a user having a poor radio environment needs more radio resources, such as codes, timeslots or power, in order to get same throughput as another user who is in a better radio environment.

When the value of f is 1 (one), the scheduling metric is equal to so-called proportional fair scheduling (3).

$$(3) \qquad M = \frac{S(k)}{R(k)}.$$

The principle in proportional fair scheduling is that a user in a good radio environment will get more data, whereas a user in a poor environment will get less data. On average, each user gets an equal amount of transmission turns.

When the value of f increases above 1 and is much higher than 1, the importance of the denominator decreases in (1) and the scheduling metric approaches maximum committed information rate (CIR) scheduling (4).

$$(4) \qquad M = S(k).$$

In equation (4), S(k) represents the number of user bits that can be transmitted to a user in the $k^{th}$ transmission time interval (TTI). The user with the highest value of M is scheduled. The absolute value of M is irrelevant, it only matters which user has a higher value of M than other users.

Maximum CIR scheduler ideally provides the best possible average cell throughput. However, it may leave some users with a zero bit rate thus getting no data at all. Typically, such users are in the cell edge area, where the radio environment with respect to a transmitting base station is poor in comparison with the environment close to the base station. With respect to fairness, a maximum CIR scheduler is very unfair, since some users get very high bit rates and others potentially nothing.

Thus, as shown by equations (1) to (4), by controlling the value of f, the fairness of the scheduler can be controlled.

The value of may be varied with several different logics. In one embodiment, the value of f may be controlled by the operator operating the network. Then, the operator may set f on the basis of average cell load, cell location or cell type, such as being a hotspot micro cell or a large macro cell. A higher average cell load would imply a higher value for f, whereby fairness decreases. In some areas, the operator might wish to use fairer scheduling logic than in other areas, that is, the operator may want more fairness in business areas than in housing areas.

In a second embodiment, the node B controls f automatically depending on instantaneous cell load, for instance. Then, the more users (high load) there are in the cell, the more the scheduler should approach to maximum CIR scheduling. Thus, increasing of the value of f is preferred since when there are many users in the system, the bit rates may be getting low for all users. Thus it may be preferred to try to keep such users, which are closer to the base station, and sacrifice only quality of cell edge users. In that way, at least some users get adequate quality.. In a high load situation, good quality cannot be offered to everyone and then it is better to use maximum CIR scheduling, which will raise the total cell throughput at the expense of fairness. Users on the cell edges will then get very little or no throughput at all but users closer to the node B will get a higher throughput in their data reception.

Keeping up a certain level of fairness in scheduling is justified when the number of users is low enough (low load) so that each user in the cell can get a reasonable throughput. But when the number of users gets higher, the throughput per user becomes lower. Then, a more unfair scheduling scheme is beneficial to make sure that a few cell edge users do not consume too much capacity from the rest of the users.

Besides load, the fairness applied in the packet scheduler may be adjusted on the basis of some other criterion. In another embodiment, fairness may be adjusted on the basis of daytime or geographical distribution of the users within the cell, for instance.

In one embodiment, equation (1) can be written in form (5)

$$(5) \qquad M = \frac{S(k)^f}{R(k)} + B,$$

wherein B is a barrier function denoting a guaranteed bit rate for the user. The B value may be there due to the type of service the user is using, for instance. Instead of +B, *B denoting multiplication with B may also be applied.

The embodiments of the invention may be realized on a processor of a base station or node B, for example. The apparatus of the invention may be configured to perform at least some of the steps described in connection with the flowchart of Figure 3. The embodiments of the invention may be implemented as a computer program comprising instructions for executing a computer process for scheduling data packets in a radio network.

The computer program may be stored on a computer program distribution medium readable by a computer or a processor. The computer program medium may be, for example but not limited to, an electric, magnetic, optical, infrared or semiconductor system, device or transmission medium. The medium may be a computer readable medium, a program storage medium, a record medium, a computer readable memory, a random access memory, an erasable programmable read-only memory, a computer readable software distribution package, a computer readable signal, a computer readable telecommunications signal, and a computer readable compressed software package.

Alternatively, the invention may be implemented by ASIC (Application Specific Integrated Circuit) or by separate logic components.

Even though the invention is described above with reference to an example according to the accompanying drawings, it is clear that the invention is not restricted thereto but it can be modified in several ways within the scope of the appended claims.

**Claims**

1. A data packet scheduler for a radio system, comprising:

   means for scheduling, by applying a scheduling metric, data packets to be delivered in radio connections within a radio cell in future transmission time intervals; and
   means for adjusting fairness of the scheduling metric dynamically by adjusting a fairness parameter during delivery of the data packets.

2. A data packet scheduler according to claim 1, wherein the adjusting means is configured to adjust the fairness parameter such that the scheduling metric converges towards a maximum committed information rate scheduling when less fairness between users of the radio connections is wanted.

3. A data packet scheduler according to claim 2, wherein in the maximum committed information rate scheduling, the users of the radio connections are sorted into a descending order based on a bit rate that is, due to radio environments of the users, delivered in the radio connections of the users.

**4.** A data packet scheduler according to claim 1, wherein the adjusting means is configured to adjust the fairness parameter such that the scheduling metric converges towards an equal throughput scheduling when more fairness between users of the radio connections is wanted.

**5.** A data packet scheduler according to claim 4, wherein, in the equal throughput scheduling, data transmissions to the users of the radio connections are scheduled such that an average throughput with respect to each user is equal.

**6.** A data packet scheduler according to claim 1, wherein the adjustment means is configured to adjust the scheduling metric between unfair scheduling and fair scheduling, and in the unfair scheduling a user having best radio environment is scheduled first, and in the fair scheduling, equal throughput of the data packets is ensured to all of the users.

**7.** A data packet scheduler according to claim 1, wherein the adjustment means is configured to change the fairness parameter on the basis of a cell load.

**8.** A data packet scheduler according to claim 7, wherein the adjustment means is configured to decrease fairness in the radio cell when the cell load is high.

**9.** A data packet scheduler according to claim 7, wherein the adjustment means is configured to increase fairness in the radio cell when the cell load is low.

**10.** A data packet scheduler according to claim 7, wherein the cell load is determined on the basis of a number of users in the radio cell.

**11.** A data packet scheduler according to claim 1, wherein the adjustment means provides a user interface for setting the fairness parameter by an operator.

**12.** A data packet scheduler according to claim 1, wherein the scheduling metric M is

$$M = \frac{S(k)^f}{R(k)},$$

wherein
S(k) is a bit rate that is, due to the radio environment of the user, delivered in a radio connection of the user in a future transmission time interval k;

f is the fairness parameter;
R(k) is an average throughput bit rate of the user in at least two transmission time intervals k.

**13.** A data packet scheduler according to claim 12, wherein the adjustment means is configured to set the fairness parameter to one (1) when a proportional fair scheduling is wanted.

**14.** A data packet scheduler according to claim 12, wherein the adjustment means is configured to set the fairness parameter to a large value to converge the scheduling metric towards a maximum committed information rate scheduling.

**15.** A data packet scheduler according to claim 12, wherein the adjustment means is configured to set the fairness parameter to zero (0) when an equal throughput scheduling is wanted.

**16.** A radio transmitter, comprising:

a data packet scheduler comprising
means for scheduling, by applying a scheduling metric, data packets to be delivered in radio connections within a radio cell in future transmission time intervals, and
means for adjusting fairness of the scheduling metric dynamically by adjusting a fairness parameter during delivery of the data packets.

**17.** A radio receiver, comprising
a data packet scheduler
means for scheduling, by applying a scheduling metric, data packets to be delivered in radio connections within a radio cell in future transmission time intervals, and
means for adjusting fairness of the scheduling metric dynamically by adjusting a fairness parameter during delivery of the data packets.

**18.** A method of scheduling data packets in a radio system, comprising:

scheduling data packets, by applying a scheduling metric, to be delivered in radio connections within a radio cell in future transmission time intervals; and
adjusting fairness of the scheduling metric dynamically during delivery of the data packets in the radio connections.

**19.** A method according to claim 18, further comprising:

adjusting the scheduling metric between unfair scheduling and fair scheduling;
scheduling first a user of a radio connection having best radio environment in the unfair scheduling; and

ensuring an equal throughput of the data packets to all of the users of the radio connections in the fair scheduling.

**20.** A method according to claim 18, further comprising:

adjusting the fairness parameter on the basis of a cell load.

**21.** A method according to claim 18, further comprising:

decreasing the fairness in the radio cell when a cell load is high.

**22.** A method according to claim 18, further comprising:

increasing the fairness in the radio cell when a cell load is low.

**23.** A method according to claim 18, further comprising:

determining the cell load on the basis of a number of users in the radio cell.

**24.** A method according to claim 18, wherein the scheduling metric M is

$$M = \frac{S(k)^f}{R(k)},$$

wherein

S(k) is a bit rate that is, due to the radio environment of a user of a radio connection, delivered in a future transmission time interval k;

f is the fairness parameter;

R(k) is an average throughput bit rate of a radio connection in at least two transmission time intervals k.

**25.** A computer program embodied on a computer readable medium, the computer program being configured to schedule data packets in radio connections within a radio cell, the computer program being configured to perform the steps of:

scheduling data packets to be delivered in radio connections in future transmission time intervals, by applying a scheduling metric; and

adjusting fairness of the scheduling metric dynamically during delivery of the data packets in the radio connections.

**26.** A computer program distribution medium readable by a computer and encoding a computer program of instructions configured to schedule data packets in radio connections within a radio cell and configured to perform the steps of:

scheduling data packets, by applying a scheduling metric, to be delivered in future transmission time intervals, and

adjusting fairness of the scheduling metric dynamically during delivery of the data packets.

Fig. 1

B

| ADJ f | LOAD |
| 202 | 204 |

| CALC R(k) | I/O |
| 206 | 208 |

| PS | TX |
| 210 | 212 |

| EST S(k) | RX |
| 214 | 216 |

200

Uu

UE

| RX | CNTL |
| 222 | 224 |

| TX | |
| 226 | |

220

Fig. 2

START

TRANSMIT DATA PACKETS IN PACKET DATA NETWORK BY
APPLYING SCHEDULING METRIC

302

304

METRIC
ADJUSTMENT
CONDITION
FULFILLED

NO

YES

ADJUST SCHEDULING METRIC DYNAMICALLY

306

END

Fig. 3

**European Patent Office**

**EUROPEAN SEARCH REPORT**

Application Number

EP 06 12 6484

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/017650 A (SOMA NETWORKS INC [US]; SHAD FAISAL [CA]) 26 February 2004 (2004-02-26) * page 10, line 26 - page 16, line 19 * ----- | 1-26 | INV. H04L12/56 |
| X | WO 03/051007 A (NORTEL NETWORKS LTD [CA]) 19 June 2003 (2003-06-19) * paragraph [0015] - paragraph [0026] * ----- | 1-26 | |
| X | WO 02/085061 A (QUALCOMM INC [US]) 24 October 2002 (2002-10-24) * paragraph [1061] - paragraph [1063] * * paragraph [1091] - paragraph [1096] * * paragraph [1113] - paragraph [1114] * * paragraph [1140] - paragraph [1142] * ----- | 1-26 | |
| X | WO 02/085054 A (QUALCOMM INC [US]) 24 October 2002 (2002-10-24) * paragraph [1012] - paragraph [1032] * ----- | 1-26 | |

TECHNICAL FIELDS
SEARCHED (IPC)

H04L
H04Q

The present search report has been drawn up for all claims

| Place of search | Date of completion of the search | Examiner |
|---|---|---|
| Berlin | 26 April 2007 | López Pérez, Mariano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**          EP 06 12 6484

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2007

| Patent document cited in search report | | Publication date | Patent family member(s) | | Publication date |
|---|---|---|---|---|---|
| WO 2004017650 | A | 26-02-2004 | AU | 2003257341 A1 | 03-03-2004 |
| | | | CA | 2398755 A1 | 19-02-2004 |
| | | | CN | 1692663 A | 02-11-2005 |
| | | | JP | 2005536129 T | 24-11-2005 |
| | | | MX | PA05002000 A | 27-05-2005 |
| WO 03051007 | A | 19-06-2003 | AU | 2002324277 A1 | 23-06-2003 |
| | | | US | 2003135632 A1 | 17-07-2003 |
| WO 02085061 | A | 24-10-2002 | BR | PI0208835 A | 21-02-2006 |
| | | | CN | 1568630 A | 19-01-2005 |
| | | | EP | 1378144 A1 | 07-01-2004 |
| | | | JP | 2004533750 T | 04-11-2004 |
| | | | TW | 230556 B | 01-04-2005 |
| | | | US | 2002183066 A1 | 05-12-2002 |
| WO 02085054 | A | 24-10-2002 | BR | 0208834 A | 18-01-2005 |
| | | | CN | 1507756 A | 23-06-2004 |
| | | | EP | 1378136 A2 | 07-01-2004 |
| | | | JP | 2004529562 T | 24-09-2004 |
| | | | TW | 231716 B | 21-04-2005 |
| | | | US | 2004062219 A1 | 01-04-2004 |
| | | | US | 2002176380 A1 | 28-11-2002 |

EPO FORM P0459

For more details about this annex : see Official Journal of the European Patent Office, No. 12/82